# EUROPEAN PATENT SPECIFICATION

(11) **EP 3 143 214 B1**
(45) Date of publication and mention of the grant of the patent: **26.08.2020**
(21) Application number: 15730220.9
(22) Date of filing: 11.05.2015
(51) Int. Cl.: E03B 1/04, E03B 3/03, E03B 5/02, E03B 11/16, F04F 7/02

(54) **HYDRO-POWERED WATER DISTRIBUTION SYSTEM**
WASSERKRAFTBETRIEBENES WASSERVERTEILUNGSSYSTEM
SYSTÈME DE DISTRIBUTION D'EAU À ACTIONNEMENT HYDRAULIQUE

(30) Priority: 13.05.2014 GB 201408431
(43) Date of publication of application: 22.03.2017
(73) Proprietor: Water Powered Technologies Limited, Bude, Cornwall EX23 8QN (GB)
(72) Inventor: SELWYN, Frederick Philip, Bude Cornwall EX23 0NW (GB)
(74) Representative: Craske, Stephen Allan
(86) International application number: PCT/GB2015/051375
(87) International publication number: WO 2015/173550

(56) References cited:
- WO-A1-2011/124909
- DE-A1- 19 816 293
- KR-B1- 101 334 423
- US-A- 4 537 563
- US-A1- 2008 272 057

## Description

### TECHNICAL FIELD OF THE INVENTION

This invention relates to hydro-powered water distribution systems.

### BACKGROUND

With increasing pressure on natural resources, systems for collecting and storing water from a natural or previously-used source (so-called grey water) and re-distributing it to a point of use are becoming increasingly popular. In a typical system, surface water may be collected and stored in an underground storage tank from which water is pumped to one or more points of use, which may typically include flushing of toilets, watering gardens and the like. The installation of present systems is expensive and often inconvenient, requiring extensive excavation work to accommodate the underground tank. Moreover, in commercially available systems an electric pump is used to redistribute the stored water which means that a suitable electricity supply must be provided (US2008/0272057). Apart from the cost of electricity, a convenient supply is not always available, and in remote areas the installation of costly wind or solar powered equipment may also be necessary. Besides the electrical driven solutions, also simple gravity driven solutions are available as mentioned in US 2008/0272057).

Ram pumps which operate on the water hammer principle are well known. WO 2011/124 909 A1 discloses a particularly efficient fluid pressure amplifier which is suitable for converting high flows at low pressure into low flows at higher pressure for delivery to elevated levels or other uses which require increased supply pressure. Ram pumps in general require an outlet head which is at least twice that of the inlet head and will cease to operate when the outlet head approaches that of the inlet head. Furthermore, traditional ram pumps often use an air bleed accumulator that introduces air into the delivery system to reduce cyclic shock and improve performance, but such systems are prone to blockages and are not very efficient as air is continually absorbed into the water requiring constant overcharging. When the supply is intermittent or variable traditional ram pumps tend to either draw air into the system and stop altogether or become highly inefficient, utilising only a small fraction of the available flow.

When grey water is to be used in clean environments, stored, or used for human consumption, it is desirable to incorporate water treatment to reduce or eliminate bacteria and viruses. Very effective water treatment systems exist, but these often need a constant water pressure to operate safely.

Previous attempts at using hydraulically operated pumps for water distribution have therefore been inherently inefficient (water recovery typically being around 5%) and they usually need to be supplemented by electrically powered pumps. Such systems could even be dangerous if a sufficient distribution pressure is not maintained for effective water treatment.

The present invention seeks to provide a new and inventive form of water collection and distribution system which does not require an electrical supply but which is nevertheless capable of operating with good efficiency.

### SUMMARY OF THE INVENTION

The present invention proposes a hydro-powered water distribution system which includes:
- a collection tank to receive and store a supply of water;
- a fluid pressure amplifier having a fluid inlet to receive water from the collection tank located at a higher level, said fluid pressure amplifier containing a resilient obturator member and having a fluid outlet;
- at least one storage tank to receive water from the fluid pressure amplifier;
- a level sensor to provide a hydraulic output signal in response to a fall in water level within the collection tank; and
- a hydraulically-operated control valve responsive to the hydraulic output signal from the level sensor to stop water passing through the fluid pressure amplifier when the water level falls in the collection tank.

The invention also provides a hydro-powered water distribution system including a fluid pressure amplifier with a low pressure exhaust outlet, a high pressure delivery outlet, and a hydraulically-operated control valve connected to the exhaust outlet.

The invention also provides a hydro-powered water distribution system including a hydraulically-operated control valve which includes a valve member operated by a diaphragm in a pressure chamber and the diaphragm is moved by differential pressure.

The invention also provides a hydro-powered water distribution system including a level sensor which includes a float which is arranged to operate a hydraulic distributor valve.

The invention also provides a hydro-powered water distribution system including a hydraulic distributor valve which has a fluid inlet port which is switched between a high-level fluid outlet port and a low-level fluid outlet port.

The invention also provides a hydro-powered water distribution system including a hydraulic distributor valve having a pair of outlet ports one of which is vented when the other outlet port is connected to a fluid inlet port.

The invention also provides a hydro-powered water distribution system including level sensor which includes a float which moves between a high-level detent position and a low-level detent position.

The invention also provides a hydro-powered water distribution system including a momentum enhancement chamber connected between a collection tank and a fluid inlet of a fluid pressure amplifier.

The invention also provides a hydro-powered water distribution system including a momentum enhancement chamber which contains a fluid conduit which is substantially longer than any linear dimension of the chamber.

The invention also provides a hydro-powered water distribution system including at least one screening filter connected in-line between a collection tank and a momentum enhancement chamber.

The invention also provides a hydro-powered water distribution system including a fluid pressure amplifier arranged to supply water via a water treatment unit.

The invention also provides a hydro-powered water distribution system including a fluid pressure amplifier arranged to supply water to a low level storage tank and a high level storage tank.

The invention also provides a hydro-powered water distribution system including a fluid pressure amplifier arranged to supply water to a slow-release tank provided with a restricted output to release water at a controlled rate.

The invention also provides a hydro-powered water distribution system including a fluid pressure amplifier arranged to supply water to a pressurised accumulator.

The invention also provides a hydro-powered water distribution system including a fluid pressure amplifier contained within a distribution housing.

The invention also provides a hydro-powered water distribution system including a fluid pressure amplifier contained within a distribution housing together with a hydraulically-operated control valve.

The invention also provides a hydro-powered water distribution system including a fluid pressure amplifier contained within a distribution housing together with a momentum enhancement chamber.

The invention also provides a hydro-powered water distribution system including a fluid pressure amplifier contained within a distribution housing together with a pressurised accumulator.

The invention also provides a hydro-powered water distribution system including a fluid pressure amplifier contained within a distribution housing together with a screening filter.

The invention also provides a hydro-powered water distribution system including a fluid pressure amplifier contained within a distribution housing together with a water treatment unit.

The invention also provides a hydro-powered water distribution system including a fluid pressure amplifier contained within a distribution housing which is associated with a storage tank.

The invention also provides a hydro-powered water distribution system including a fluid pressure amplifier contained within a distribution housing which is associated with a slow-release tank.

### BRIEF DESCRIPTION OF THE DRAWINGS

The following description and the accompanying drawings referred to therein are included by way of non-limiting example in order to illustrate how the invention may be put into practice. In the drawings:
Figure 1 is a schematic diagram showing a first hydro-powered water distribution system in accordance with the invention;
Figure 2 is a schematic diagram showing a second hydro-powered water distribution system in accordance with the invention;
Figure 3 is a general view of a preferred hydraulic level sensor and control valve for use in the distribution systems shown in a cut-off position; and
Figure 4 is a similar view to Fig. 3 but showing the level sensor and control valve in their pump-enabled positions.

### DETAILED DESCRIPTION OF THE DRAWINGS

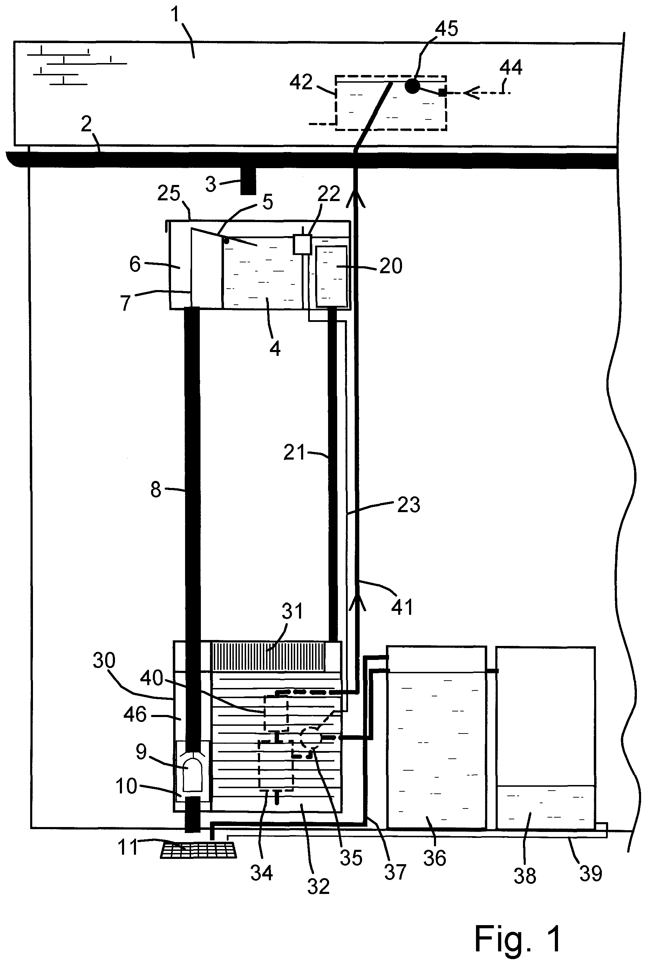

Referring firstly to **Fig. 1****,** the drawing shows a self-powered water distribution system which is suitable for low demand uses such as domestic dwellings. The system is quick to install and unobtrusive due to its above-ground installation and modular construction.

Water collected from an intermittent natural source, e.g. from a roof 1 by gutters 2, is conducted by downpipe 3 to a high-level collection tank 4, preferably installed just below gutter level. The tank incorporates a first flush mechanism with a tilting channel 5 which is pivotally mounted to direct water into the main part of tank 4 or alternatively into a sump 6. The channel 5 is connected by a link 7 through an overflow downpipe 8 to a float 9 housed within a float chamber 10 provided with a small bottom outlet hole. The first flush mechanism is balanced such that the channel 5 will normally divert incoming water into the sump 6 while the float 9 closes the outlet of the float chamber. When water starts to flow from the downpipe 3 it is initially directed into the sump 6 and along the overflow pipe 8 into the float chamber 10. As the water level rises in the float chamber the float will lift and allow the channel to tilt and direct water into the collection tank 4. Eventually the float chamber will empty through its restricted outlet into a storm water drain 11 allowing the channel to tilt back to the rest position. Such a first flush event will therefore take place every time a new water inflow occurs. The first flush mechanism thus intercepts the initial part of each inflow and discharges it into the drain, thereby removing debris and silt that can build up in roofs and gutters during dry periods.

Within the tank 4 there is a coarse primary screen 20 which filters the collected water before entering a supply pipe 21. The collection tank also contains a float-operated sensor 22 (see below) which provides a hydraulic output through a control pipe system 23 whenever the water level within the collection tank falls below a predetermined level. The sensor 22 also signals via the control pipe system 23 when the water level rises above a predetermined level. The collection tank 4 is preferably covered by a lid 25 to prevent direct entry of bird droppings or other contamination.

A distribution housing 30 is mounted at a lower level than the collection tank 4, typically just above ground level. The supply pipe 21 enters the top of the housing 30 to feed a fine secondary screen 31, occupying a top part of the housing, to remove microparticles from the incoming water supply. After passing through the screen 31, the filtered flow enters a momentum enhancement chamber 32 which occupies a lower portion of the housing below the screen 31. Essentially this chamber comprises a relatively long fluid conduit (typically tens of metres in length) which is condensed into a relatively small space within the chamber. Upon reaching the remote end of the conduit, water enters the inlet port of an hydraulically-operated pump 34, mounted on the chamber 32. Although a conventional hydraulic ram pump may be used it is preferred to use a fluid pressure amplifier as described in WO 2011/124 909 A1**,** which is capable of being fine-tuned to operate with optimum efficiency at relatively low pressure differentials, the disclosure of which is incorporated herein by reference. The fluid pressure amplifier contains a resilient obturator member which oscillates against a seat within the amplifier to interrupt fluid flow between the input port and an exhaust port. As a result, a pulsed high pressure flow of water can be obtained from a delivery outlet via an internal venturi valve incorporated within the pump. A control valve 35 (see below) is connected to an exhaust port of the fluid pressure amplifier, hydraulically operated by the level sensor 22 via the control pipe system 23. By opening and closing the control valve 35 the pump can be turned on and off automatically so that the pump only operates when the head of water within the collection tank 4 is sufficient to maintain a good pressure and efficiency at the delivery outlet of the pump.

The momentum enhancement chamber 32 has the effect of increasing the cyclic flow of water into the pump 34 causing it to operate at a reduced speed but with higher efficiency. The chamber also makes the system less tolerant of variations in the head of water on the input side due to differences in layout or variations in level within the collection tank 4.

The outlet flow from the exhaust port via control valve 35 is still at a relatively low pressure and may simply be discarded direct to the drain 11, but it is preferred to divert the flow to a low level storage tank 36, the contents of which can be used for watering gardens etc. The tank 36 has an overflow 37 leading to the drain 11. An important additional feature of the present system is that, in the event of a storm surge which is sufficient to fill the storage tank 36, excess water can overspill into a slow-release tank 38 which slowly releases its contents into the drain 11 via a restrictive port and/or narrow-bore pipe 39. The overflow 37 only comes into operation when both thanks 36 and 38 become full. This retention and slow release of storm water into the drainage system can materially contribute to flood prevention by reducing the overall volume of water entering sewers and river courses during a flash storm surge.

The high pressure delivery outlet from the pump 34 passes via an in-line water treatment unit 40 (e.g. iodine treatment, chlorination or reverse osmosis) contained within the housing 30, following which the treated water passes via a delivery pipe 41 to a high level storage tank 42, which may for example be situated in a loft space above the level of the collection tank 4. The tank 42 may provide a supply of clean drinking water, for washing or bathing etc., which may, as a back-up, be supplemented by a supply from a water main 44 via a float valve 45. Clearly the delivery outlet of the pump can supply water for purposes such as toilet flushing which need not necessarily pass through the treatment unit 40. Alternatively, the high pressure water may be stored in a low level pressurised storage vessel from which it can again be distributed to higher levels.

The distribution housing 30 provides a compact unit incorporating the momentum enhancement chamber, secondary filtration, pump, water treatment etc. in a single unit which is simple and convenient to install. The housing can provide all the correct apertures and connections for the various pipes and any taps that may be required. Furthermore, to further simplify the plumbing requirements the housing incorporates an additional compartment 46 containing the first flush float chamber 10 and lower end of the downpipe 8.

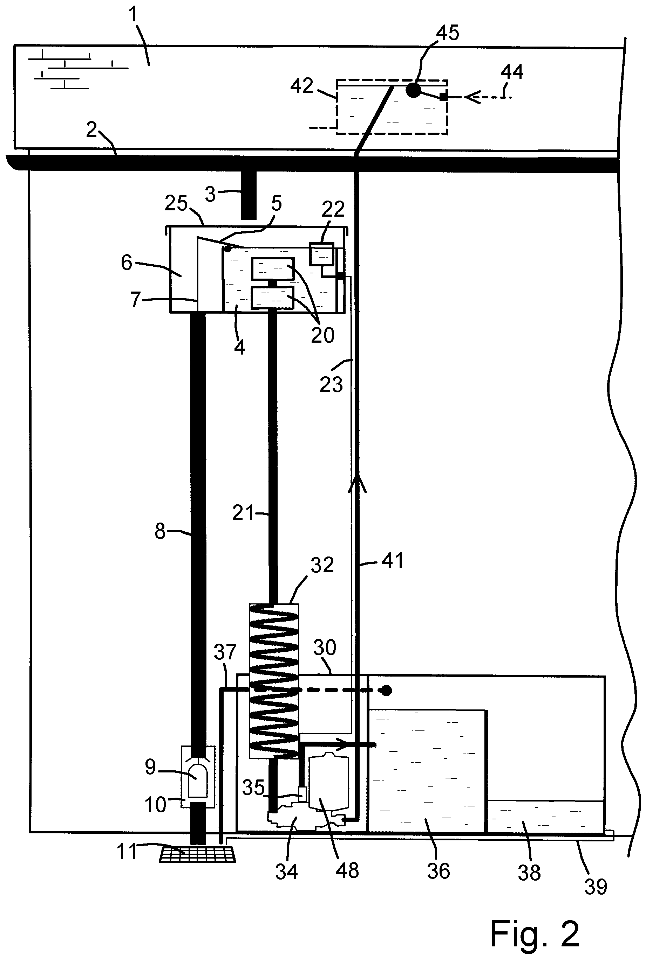

**Fig. 2****,** shows a water distribution system which is suitable for higher demand uses such as small commercial establishments. Water collected from natural sources, e.g. from roofs 1 by gutters 2, is conducted by downpipes 3 to a high-level collection tank 4 (preferably installed just below gutter level). The tank incorporates a first flush mechanism with a tilting channel 5 which is pivotally mounted to direct water into the main part of tank 4 or alternatively into a sump 6. The channel 5 is connected by a wire 7 through an overflow downpipe 8 to a float 9 housed within a float chamber 10 provided with a small bottom outlet hole. The first flush mechanism is balanced such that the channel 5 will normally divert incoming water into the sump 6 while the float 9 closes the outlet of the float chamber. When water starts to flow from the downpipe 3 it is initially directed into the sump 6 and along the overflow downpipe 8 into the float chamber 10. As the water level rises in the float chamber the float will lift and allow the channel to tilt and direct water into the collection tank. Eventually the float chamber will empty through its restricted outlet into a storm water drain 11 allowing the channel to tilt back to the rest position. A first flush event will therefore take place every time a new water inflow occurs. The first flush mechanism thus intercepts the initial part of each inflow and discharges it via overflow 8, thereby removing debris and silt that can build up in roofs and gutters during dry periods.

Within the tank 4 are installed one or more filters 20 which screen and filter the collected water before entering a supply pipe 21. The collection tank also contains a float-operated sensor 22 (see below) which provides a hydraulic output through a control pipe system 23 whenever the water level within the collection tank falls below a predetermined level. The sensor 22 also signals via the control pipe system 23 when the water level rises again above a predetermined level. The collection tank 4 is covered by a lid 25 to prevent direct entry of bird droppings or other contaminating objects.

A distribution housing 30 is mounted at a lower level than the collection tank 4, typically just above ground level. The supply pipe 21 enters the top of the housing 30 via a momentum enhancement chamber 32. This chamber comprises a relatively long fluid conduit (typically tens of metres in length) which is coiled or otherwise condensed into a relatively compact space within the chamber. At the outlet end of the momentum enhancement chamber 32, which lies within the housing 30, water enters the inlet port of an hydraulically-operated pump 34. Although a conventional hydraulic ram pump may be used it is preferred to use a fluid pressure amplifier as described in WO 2011/124 909 A1**,** which is capable of being fine-tuned to operate with optimum efficiency at relatively low pressure differentials, the disclosure of which is incorporated herein by reference. The fluid pressure amplifier contains a resilient obturator member which oscillates against a seat within the amplifier to interrupt fluid flow between the input port and an exhaust port. As a result, a pulsed high pressure flow of water can be obtained from a delivery outlet via an internal venturi valve incorporated within the pump. A control valve 35 (see below) is connected to an exhaust port of the fluid pressure amplifier, hydraulically operated by the level sensor 22 via the control pipe system 23. By opening and closing the control valve 35 the pump can be turned on and off automatically so that the pump only operates to pass water when the head of water within the collection tank 4 is sufficient to maintain a good pressure and efficiency at the delivery outlet of the pump.

The momentum enhancement chamber 32 has the effect of increasing the cyclic flow of water into the pump 34 causing it to operate at a reduced speed but with higher efficiency. The chamber also makes the system less tolerant of variations in the head of water on the input side due to differences in layout or variations in level within the collection tank 4.

The outlet flow from the exhaust port via control valve 35 is still at a relatively low pressure and may simply be discarded direct to the drain 11, but it is preferred to divert the flow to a low level storage tank 36, the contents of which can be used for watering gardens etc. The tank 36 has an overflow 37 leading to the drain 11. An important additional feature of the present system is that, in the event of a storm surge which is sufficient to fill the storage tank 36, excess water can overspill into a slow-release tank 38 which slowly releases its contents into the drain 11 via a restrictive port and/or narrow-bore pipe 39. The overflow 37 only comes into operation when both thanks 36 and 38 become full. This retention and slow release of storm water can materially contribute to flood prevention by reducing the overall volume of water entering sewers and river courses during a flash storm surge.

Attached to the pump outlet is an accumulator 48 which can either be a pre-charged diaphragm or bladder type accumulator, an automatic air charge accumulator, or a spring accumulator. The accumulator absorbs pressure pulses and helps to provide more efficient delivery of water. The high pressure delivery outlet from the pump 34 passes via a delivery pipe 41 to a high level storage tank 42, which may for example be situated on a roof above the level of the collection tank 4. The tank 42 may provide a supply of water for washing, bathing, toilet flushing etc. which may, as a back-up, be supplemented by a supply from a water main 44 via a float valve 45. Alternatively, the high pressure water may be stored in a low level pressurised storage vessel from which it can again be distributed to higher levels.

The distribution housing 30 provides a compact unit incorporating the momentum enhancement chamber, pump, accumulator, storage tanks 36 and 38 etc. in a single unit which is simple and convenient to install. The housing can provide all the correct apertures and connections for the various pipes and any taps that may be required.

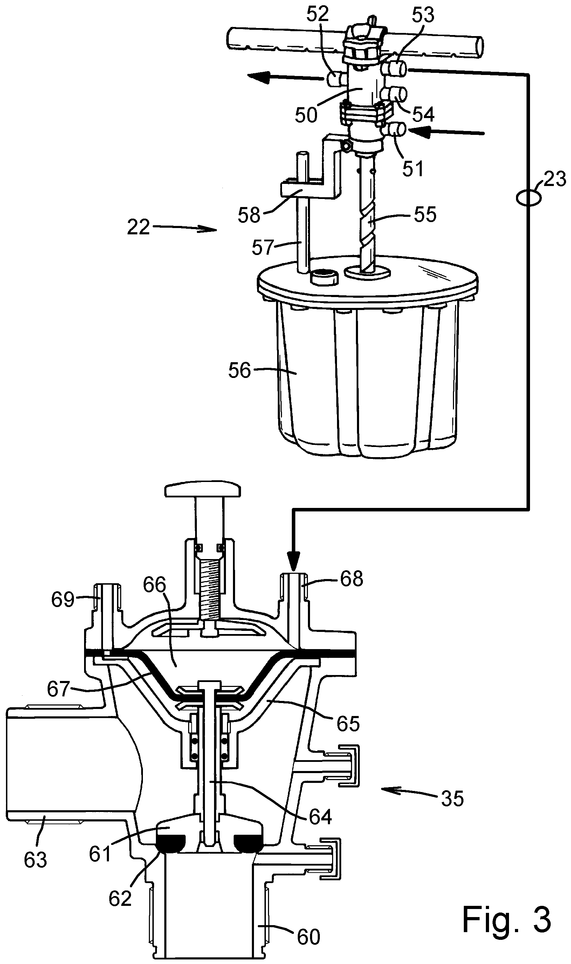

The level sensor 22 and control valve 35 may take various forms but a preferred form of level sensor and control valve are shown in **Fig. 3****.**

The level sensor 22 includes a hydraulic distributor valve 50 which is mounted in a fixed position within the collection tank 4. The distributor valve has an inlet port 51 supplied with water pressure e.g. from the head of water in the storage tank 42, a vent port 52 which may discharge directly into the tank 4, a low-level signal port 53 connected to one limb of a twin hydraulic control pipe 23, and a high-level signal port 54 connected to the other limb of the control pipe. The valve 50 is operated by a coarse-threaded control screw 55 which carries a float 56. The float is vertically movable and is non-rotatably engaged with the screw thread by a guide rod 57 which slides within a bracket 58 fixed with the valve 50. (Alternatively the guide rod may be fixed, sliding within a guide aperture in the float.) To ensure smooth operation of the distributor valve it is preferred that the float co-operates with detents on the control screw 55 (e.g. frictional, sprung ball or sprung pawl detents) so that the float is held at its upper and lower extremities until the water level has changed significantly.

The control valve 35 has an inlet port 60 connected to the exhaust port of the pump 34 and contains a valve member 61 which closes against a seat 62 to prevent the flow from reaching an outlet port 63. A stem 64 of the valve member sealingly passes through an internal wall 65 into a control chamber 66 where it is engaged with a diaphragm 67. The space above the diaphragm is connected via a first signal port 68 and the first limb of the control pipe 23 to the low-level signal port 53, while the space below the diaphragm is connected via a second signal port 69 and the second limb of the control pipe to the high-level signal port 54.

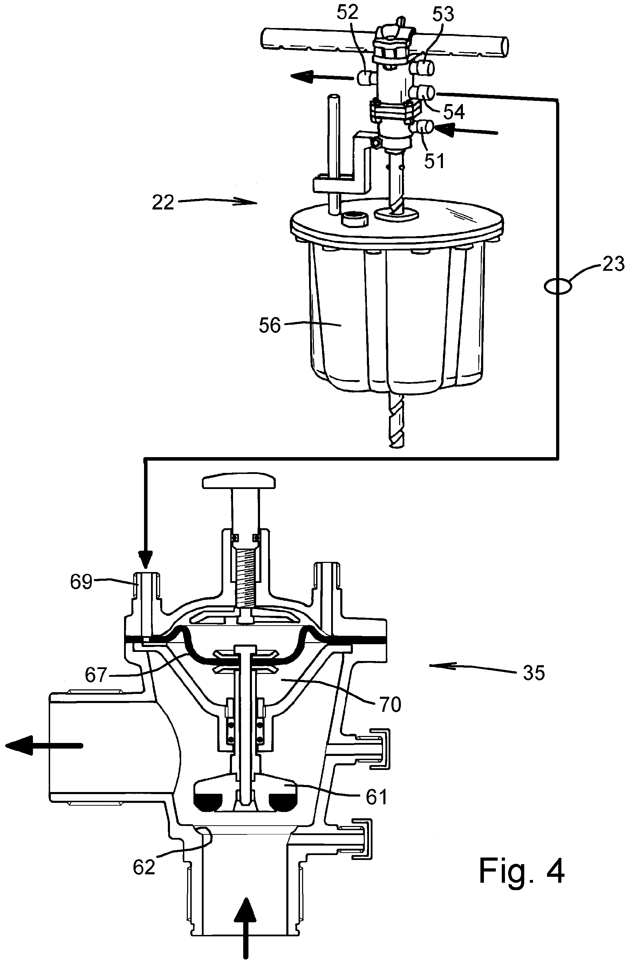

When the float 56 of the level sensor 22 is at its lower detent position the inlet pressure at port 51 is applied to the low-level port 53 and thence to the space above the diaphragm 67. The applied pressure causes the valve member 61 to close off the flow from the exhaust outlet of the pump 34, shutting down the pump. When, following the first flush, there is a new inflow of water to tank 4 and the float 56 rises to the upper detent position as shown in **Fig. 4****,** the pressure at port 51 is applied via the high-level port 54 and second port 69 to the space 70 below the diaphragm 67. This causes the valve member 61 to lift off the seat 62 and opens the exhaust outlet of the pump so that the pump immediately begins to operate at full output. At both detent positions of the float the non-pressurised ports 53/54 of the distributor valve are vented via port 52 so that maximum pressure differential is always maintained across the diaphragm 67.

Although one objective is to reduce overall energy consumption, in the present water distribution systems the possibility of including a small electric pump (possibly solar powered) is not precluded, e.g. connected in the delivery line of the hydraulic pump 34.

Due to the efficiency enhancement measures incorporated in the present delivery systems they may typically be capable of recovering and re-distributing at least 60% of the available grey water using hydraulic power only. They also have the advantage of being easy to install and low maintenance with few wearing parts.

Although the above examples concern the collection of surface water the system can be used for collecting and re-distributing water from any suitable source. For example, in a water treatment plant used water can be collected and re-used for various purposes such as tank flushing, vehicle or plant cleaning, screen washing, or agricultural irrigation for example. A hydraulically-operated motor can be used to cyclically supply a number of different zones in turn.

Whilst the above description places emphasis on the areas which are believed to be new and addresses specific problems which have been identified, it is intended that the features disclosed herein may be used in any combination which is capable of providing a new and useful advance in the art.

## Claims

1. A hydro-powered water distribution system which includes:
- a collection tank (4) to receive and store a supply of water;
- a fluid pressure amplifier (34) having a fluid inlet arranged to receive water from the collection tank (4), said fluid pressure amplifier containing a resilient obturator member and having a fluid outlet, and said collection tank (4) being located at a higher level than said fluid pressure amplifier (34);
- at least one storage tank (42, 36) to receive water from the fluid pressure amplifier;
- a level sensor (22) to provide a hydraulic output signal in response to a fall in water level within the collection tank (4); and
- a hydraulically-operated control valve (35) responsive to the hydraulic output signal from the level sensor (22) to stop water passing through the fluid pressure amplifier (34) when the water level falls in the collection tank (4).

2. A hydro-powered water distribution system according to Claim 1 in which the fluid pressure amplifier (34) has a low pressure exhaust outlet and a high pressure delivery outlet, and the hydraulically-operated control valve (35) is connected to the exhaust outlet.

3. A hydro-powered water distribution system according to Claim 1 in which the hydraulically-operated control valve (35) includes a valve member (61) operated by a diaphragm (67) in a pressure chamber (66, 70) and the diaphragm is moved by differential pressure.

4. A hydro-powered water distribution system according to Claim 1 which includes a hydraulic distributor valve (50) and in which the level sensor (22) includes a float (56) which is arranged to operate the hydraulic distributor valve (50).

5. A hydro-powered water distribution system according to Claim 4 in which the hydraulic distributor valve (50) has a fluid inlet port (51) which is switched between a high-level fluid outlet port (54) and a low-level fluid outlet port (53).

6. A hydro-powered water distribution system according to Claim 5 in which one of said outlet ports (53, 54) is vented when the other outlet port (54, 53) is connected to the fluid inlet port (51).

7. A hydro-powered water distribution system according to Claim 4 in which the float (56) moves between a high-level detent position and a low-level detent position.

8. A hydro-powered water distribution system according to Claim 1 in which a chamber (32) is connected between the collection tank (4) and the fluid inlet of the fluid pressure amplifier (34).

9. A hydro-powered water distribution system according to Claim 8 in which the chamber (32) contains a fluid conduit which is substantially longer than any linear dimension of the chamber.

10. A hydro-powered water distribution system according to Claim 1 in which at least one screening filter (20, 31) is connected in line between the collection tank (4) and the fluid pressure amplifier (34).

11. A hydro-powered water distribution system according to Claim 1 which includes a water treatment unit (40) and in which the fluid pressure amplifier (34) is arranged to supply water via the water treatment unit (40).

12. A hydro-powered water distribution system according to Claim 1 in which the fluid pressure amplifier (34) is arranged to supply water to a high level storage tank (42) and a low level storage tank (36).

13. A hydro-powered water distribution system according to Claim 1 in which the fluid pressure amplifier (34) is arranged to supply water to a slow-release tank (38) provided with a restricted output (39) to release water at a controlled rate.

14. A hydro-powered water distribution system according to Claim 1 in which the fluid pressure amplifier (34) is arranged to supply water to a pressurised accumulator (48).

15. A hydro-powered water distribution system according to Claim 1 in which the fluid pressure amplifier (34) is contained within a distribution housing (30) together with one or more of:
- the hydraulically-operated control valve (35);
- a momentum enhancement chamber (32);
- a pressurised accumulator (48);
- a screening filter (31); and
- a water treatment unit (40).

## Patentansprüche

1. Wasserkraftbetriebenes Wasserverteilungssystem, welches aufweist:
- einen Sammeltank (4) zum Aufnehmen und Speichern einer Wasserzufuhr,
- einen Fluiddruckverstärker (34) mit einem Fluideinlass, der dazu ausgestaltet ist, um Wasser aus dem Sammeltank (4) aufzunehmen, wobei der Fluiddruckverstärker ein nachgiebiges Abdichtungselement aufweist und einen Fluidauslass hat, und wobei der Sammeltank (4) auf einem höheren Niveau als der Fluiddruckverstärker (34) angeordnet ist,
- wenigstens einem Vorratstank (42, 36), um Wasser von dem Fluiddruckverstärker aufzunehmen,
- einen Niveausensor (22), um ein hydraulisches Ausgabesignal in Reaktion auf einen Abfall des Wasserniveaus innerhalb des Sammeltanks (4) bereitzustellen, und
- ein hydraulisch betätigtes Steuerventil (35), das auf das hydraulische Ausgabesignal von dem Niveausensor (22) reagiert, um den Fluiddruckverstärker (34) passierendes Wasser zu stoppen, wenn das Wasserniveau in dem Sammeltank (4) fällt.

2. Wasserkraftbetriebenes Wasserverteilungssystem nach Anspruch 1, bei dem der Fluiddruckverstärker (34) einen Niederdruck-Abgabeauslass und einen Hochdruck-Lieferauslass aufweist und wobei das hydraulisch betätigte Steuerventil (35) mit dem Abgabeauslass verbunden ist.

3. Wasserkraftbetriebenes Wasserverteilungssystem nach Anspruch 1, bei dem das hydraulisch betätigte Steuerventil (35) ein Ventilelement (61) enthält, das durch eine Membran (67) in einer Druckkammer (66, 70) betätigt wird, und wobei die Membran durch Druckdifferenz bewegt wird.

4. Wasserkraftbetriebenes Wasserverteilungssystem nach Anspruch 1, das ein hydraulisches Verteilerventil (50) aufweist und in dem der Niveausensor (22) einen Schwimmer (56) umfasst, der dazu ausgestaltet ist, um das hydraulische Verteilerventil (50) zu betätigen.

5. Wasserkraftbetriebenes Wasserverteilungssystem nach Anspruch 4, bei dem das hydraulische Verteilerventil (50) einen Fluideinlassausschluss (51) hat, der zwischen einem Hochniveau-Fluidauslassanschluss (54) und einem Niedrigniveau-Fluidauslassanschluss (53) geschaltet ist.

6. Wasserkraftbetriebenes Wasserverteilungssystem nach Anspruch 5, bei dem einer der Auslassanschlüsse (53, 54) entlüftet wird, wenn der andere Auslassanschluss (54, 53) mit dem Fluideinlassanschluss (51) verbunden ist.

7. Wasserkraftbetriebenes Wasserverteilungssystem nach Anspruch 4, bei dem der Schwimmer (56) sich zwischen einer Hochniveau-Raststellung und einer Niedrigniveau-Raststellung bewegt.

8. Wasserkraftbetriebenes Wasserverteilungssystem nach Anspruch 1, bei dem eine Kammer (32) zwischen dem Sammeltank (4) und dem Fluideinlass des Fluiddruckverstärkers (34) angeschlossen ist.

9. Wasserkraftbetriebenes Wasserverteilungssystem nach Anspruch 8, bei dem die Kammer (32) eine Fluidleitung enthält, die wesentlich länger als irgendeine lineare Abmessung der Kammer ist.

10. Wasserkraftbetriebenes Wasserverteilungssystem nach Anspruch 1, bei dem wenigstens ein Siebfilter (20, 31) in der Leitung zwischen dem Sammeltank (4) und dem Fluiddruckverstärker (34) montiert ist.

11. Wasserkraftbetriebenes Wasserverteilungssystem nach Anspruch 1, das eine Wasserbehandlungseinheit (40) aufweist und in dem der Fluiddruckverstärker (34) dazu ausgestaltet ist, um Wasser über die Wasserbehandlungseinheit (40) zu liefern.

12. Wasserkraftbetriebenes Wasserverteilungssystem nach Anspruch 1, bei dem der Fluiddruckverstärker (34) dazu ausgestaltet ist, Wasser zu einem Hochniveau-Speichertank (42) und einem Niedrigniveau-Speichertank (36) zu liefern.

13. Wasserkraftbetriebenes Wasserverteilungssystem nach Anspruch 1, bei dem der Fluiddruckverstärker (34) dazu ausgestaltet ist, Wasser zu einem Tank (38) mit langsamer Abgabe zu liefern, der mit einer Drosselausgabe (39) versehen ist, um Wasser mit einer kontrollierten Abgaberate abzugeben.

14. Wasserkraftbetriebenes Wasserverteilungssystem nach Anspruch 1, bei dem der Fluiddruckverstärker (34) dazu ausgestaltet ist, einem unter Druck gesetzten Akkumulator (48) Wasser zuzuführen.

15. Wasserkraftbetriebenes Wasserverteilungssystem nach Anspruch 1, bei dem der Fluiddruckverstärker (34) innerhalb eines Verteilungsgehäuses (30) enthalten ist zusammen mit einem oder mehreren von:
- dem hydraulisch betätigten Steuerventil (35),
- einer Dynamikverstärkungskammer (32),
- einem unter Druck gesetzten Akkumulator (48),
- einem Siebfilter (31) und
- einer Wasserbehandlungseinheit (40).

## Revendications

1. Système de distribution d'eau à actionnement hydraulique qui comprend :
- un réservoir de collecte (4) pour recevoir et stocker une réserve d'eau ;
- un amplificateur de pression de fluide (34) ayant une entrée de fluide agencée pour recevoir de l'eau provenant du réservoir de collecte (4), ledit amplificateur de pression de fluide contenant un élément obturateur élastique et ayant une sortie de fluide, et ledit réservoir de collecte (4) étant situé à un niveau plus haut que ledit amplificateur de pression de fluide (34) ;
- au moins un réservoir de stockage (42, 36) pour recevoir de l'eau provenant de l'amplificateur de pression de fluide ;
- un capteur de niveau (22) pour fournir un signal de sortie hydraulique en réponse à une chute de niveau d'eau dans le réservoir de collecte (4) ; et
- une vanne de commande à actionnement hydraulique (35) répondant au signal de sortie hydraulique provenant du capteur de niveau (22) pour arrêter l'eau passant à travers l'amplificateur de pression de fluide (34) lorsque le niveau d'eau chute dans le réservoir de collecte (4).

2. Système de distribution d'eau à actionnement hydraulique selon la revendication 1, dans lequel l'amplificateur de pression de fluide (34) a une sortie d'échappement à basse pression et une sortie de distribution à haute pression, et la vanne de commande à actionnement hydraulique (35) est reliée à la sortie d'échappement.

3. Système de distribution d'eau à actionnement hydraulique selon la revendication 1, dans lequel la vanne de commande à actionnement hydraulique (35) comprend un élément de vanne (61) actionné par une membrane (67) dans une chambre de pression (66, 70) et la membrane est déplacée par une pression différentielle.

4. Système de distribution d'eau à actionnement hydraulique selon la revendication 1, comprenant une vanne de distribution hydraulique (50) et dans lequel le capteur de niveau (22) comprend un flotteur (56) qui est agencé pour actionner la vanne de distribution hydraulique (50).

5. Système de distribution d'eau à actionnement hydraulique selon la revendication 4, dans lequel la vanne de distribution hydraulique (50) a un orifice d'entrée de fluide (51) qui est commuté entre un orifice de sortie de fluide à niveau haut (54) et un orifice de sortie de fluide à niveau bas (53).

6. Système de distribution d'eau à actionnement hydraulique selon la revendication 5, dans lequel l'un desdits orifices de sortie (53, 54) est mis à l'air libre lorsque l'autre orifice de sortie (54, 53) est relié à l'orifice d'entrée de fluide (51).

7. Système de distribution d'eau à actionnement hydraulique selon la revendication 4, dans lequel le flotteur (56) se déplace entre une position de cliquet à niveau haut et une position de cliquet à niveau bas.

8. Système de distribution d'eau à actionnement hydraulique selon la revendication 1, dans lequel une chambre (32) est reliée entre le réservoir de collecte (4) et l'entrée de fluide de l'amplificateur de pression de fluide (34).

9. Système de distribution d'eau à actionnement hydraulique selon la revendication 8, dans lequel la chambre (32) contient un conduit de fluide qui est sensiblement plus long que toute dimension linéaire de la chambre.

10. Système de distribution d'eau à actionnement hydraulique selon la revendication 1, dans lequel au moins un filtre à tamis (20, 31) est relié en ligne entre le réservoir de collecte (4) et l'amplificateur de pression de fluide (34).

11. Système de distribution d'eau à actionnement hydraulique selon la revendication 1, comprenant une unité de traitement d'eau (40), et dans lequel l'amplificateur de pression de fluide (34) est agencé pour fournir de l'eau par l'intermédiaire de l'unité de traitement d'eau (40).

12. Système de distribution d'eau à actionnement hydraulique selon la revendication 1, dans lequel l'amplificateur de pression de fluide (34) est agencé pour fournir de l'eau à un réservoir de stockage à niveau haut (42) et un réservoir de stockage à niveau bas (36).

13. Système de distribution d'eau à actionnement hydraulique selon la revendication 1, dans lequel l'amplificateur de pression de fluide (34) est agencé pour fournir de l'eau à un réservoir à libération lente (38) comportant une sortie calibrée (39) pour libérer de l'eau à un débit contrôlé.

14. Système de distribution d'eau à actionnement hydraulique selon la revendication 1, dans lequel l'amplificateur de pression de fluide (34) est agencé pour fournir de l'eau à un accumulateur mis sous pression (48).

15. Système de distribution d'eau à actionnement hydraulique selon la revendication 1, dans lequel l'amplificateur de pression de fluide (34) est contenu à l'intérieur d'un logement de distribution (30) conjointement avec un ou plusieurs de :
- la vanne de commande à actionnement hydraulique (35) ;
- une chambre d'augmentation de quantité de mouvement (32) ;
- un accumulateur mis sous pression (48) ;
- un filtre à tamis (31) ; et
- une unité de traitement d'eau (40).
